# EUROPEAN PATENT APPLICATION

(11) **EP 3 693 938 A1**
(43) Date of publication of application: **12.08.2020**
(21) Application number: 19156413.7
(22) Date of filing: 11.02.2019
(51) Int. Cl.: G08G 1/00

(54) **PASSAGE OF A PLATOON OF VEHICLES**

(71) Applicant: Ningbo Geely Automobile Research & Development Co. Ltd., Hangzhou Bay New District Ningbo 315336 (CN)
(72) Inventor: NILSSON, Magnus, 448 37 FLODA (SE); SETTERBERG, Johan, 416 79 GÖTEBORG (SE)
(74) Representative: Zacco Sweden AB

(57) **Abstract**

A method for controlling passage of a group of vehicles. The method comprises receiving (103), by a first vehicle, a signal from at least one second vehicle in the group of vehicles comprising information indicative of its length. The method further comprises communicating (106), by the first vehicle, information indicative of a time for passing a certain point along a road for the group of vehicles to a roadside unit or remote unit based on the received signal from the at least one second vehicle.

Corresponding apparatus, computer program product and system are also disclosed.

## Description

### TECHNICAL FIELD

The present disclosure relates generally to the field of platooning of vehicles. More particularly, it relates to controlling passage of a group of vehicles.

### BACKGROUND

An objective of platooning vehicles may typically be to be act and be seen as a unity.

Platooning vehicles or platooning vehicle trains, , i.e. a group of vehicles, might impact traffic flows e.g. at traffic lights wherein a platooning vehicle train might not be able to complete the drive until the state of the traffic lights changes from green to red.

Traffic flows may be controlled by means of adaptive traffic signals, wherein such signals adjust signal timing parameters, in real-time, to adapt to traffic conditions. An example of this may be busses or trams that are able to inform the adaptive traffic signals ahead of their arrival and get priority for passage.

Therefore, it is a further objective of platooning vehicles, in addition to maintaining the platooning vehicle train as a unity which shall not be divided until configured otherwise, to ensure that the platooning vehicle train does not impact other vehicles in the traffic flows e.g. if the state of the traffic lights changes while in transit through an intersection.

Hence, there is a need for alternative approaches to controlling passage of a group of vehicles.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

An object of some embodiments is to provide alternative approaches to controlling passage of a group of vehicles.

According to a first aspect, this is achieved by a method for controlling passage of a group of vehicles.

The method comprises receiving, by a first vehicle, a signal from at least one second vehicle in the group of vehicles comprising information indicative of its length.

The method further comprises communicating, by the first vehicle, information indicative of a time for passing a certain point along a road for the group of vehicles to a roadside unit or remote unit based on the received signal from the at least one second vehicle.

An advantage of some embodiments is that alternative approaches to controlling passage of a group of vehicles are provided.

Another advantage of some embodiments is that a real-time adaption to traffic conditions and competing flows of traffic is provided even for platooning vehicles.

Yet an advantage of some embodiments is that a predictability is provided even for platooning vehicles.

Yet another advantage of some embodiments is a safer traffic situation especially in environments with competing traffic flows since the group of vehicles is seen as a unity and the impact on competing traffic flows is minimized.

In some embodiments, the signal from the at least one second vehicle further comprises information indicative of its distance to a vehicle in front or rear of the at least one second vehicle.

An advantage of some embodiments is that the first vehicle is aware of the inter-vehicle distance of the at least one second vehicle in the group of vehicles which may lead to more accurate time for passing a certain point along a road for the group of vehicles.

In some embodiments, the method further comprises measuring an actual inter-vehicle distance, by the second vehicle, to a vehicle in front or rear of the at least one second vehicle and wherein the information in the signal from the at least one second vehicle comprises the measured actual inter-vehicle distance.

An advantage of some embodiments is that the first vehicle is aware of the actual inter-vehicle distance of the at least one second vehicle in the group of vehicles which may lead to even more accurate time for passing a certain point along a road for the group of vehicles.

In some embodiments, the method further comprises determining a length of the group of vehicles based on the first vehicle's length and the at least one second vehicle's length and distance to the vehicle in front or rear of the at least one vehicle and determining a time for passing a certain point along a road for the group of vehicles based on the determined length and speed of the group of vehicles.

An advantage of some embodiments is that the first vehicle takes into account all parameters impacting the length of the group of vehicles as well as the speed of the group of vehicles which may lead to an extremely accurate time for passing a certain point along a road for the group of vehicles.

In some embodiments, the method further comprises receiving, from the roadside unit or remote unit, a positive or a negative acknowledgement for passage in response to the communicated time for passing.

An advantage of some embodiments is that the acknowledgement provides an acceptance or denial of the communicated information indicative of a time for passing a certain point along a road for the group of vehicles which may further narrow the options available for the group of vehicles and thereby provide more predictability e.g. if the acknowledgement is positive then the alternatives may be to continue accordingly or adapt the speed of the group of vehicles but if the acknowledgement is negative then the alternatives may be to either stop the group of vehicles or re-configure the group of vehicles or continue despite the negative acknowledgement.

In some embodiments, the method further comprises receiving, from the road side unit or remote unit, an allocated time for passing in addition to the positive acknowledgement.

An advantage of some embodiments is that the allocated time provides even further predictability and a possibility to adapt the speed of the group of vehicles in view of the allocated time.

In some embodiments, the method further comprises requesting, by the first vehicle, the at least one second vehicle to provide information indicative of its length.

An advantage of some embodiments is that signalling is initiated by the first vehicle so that a continuous signalling is avoided and the signalling only takes place when needed, i.e. when initiated by the first vehicle.

In some embodiments, the communication between the first vehicle and the at least one second vehicle is enabled via V2V communication.

An advantage of some embodiments is that exchange of information is enabled between vehicles.

In some embodiments, the communication between the first vehicle and the roadside unit is enabled via V2I communication.

An advantage of some embodiments is that exchange of information is enabled between vehicle and infrastructure such as a road side unit or remote unit.

In some embodiments, the first vehicle is a leader vehicle and the at least one second vehicle comprises a following vehicle.

An advantage of some embodiments is that the leader vehicle leads the following vehicle and the following vehicle follows the decisions made by the leader vehicle for a group of vehicles e.g. adapt the speed, brake or re-configure the group of vehicles.

In some embodiments, the group of vehicles comprises a leader vehicle and a plurality of following vehicles.

An advantage of some embodiments is that the leader vehicle leads a plurality of following vehicles and the plurality of following vehicle follow the decisions made by the leader vehicle for the group of vehicles e.g. adapt the speed, brake or re-configure the group of vehicles.

According to a second aspect, this is achieved by a computer program product comprising a non-transitory computer readable medium, having thereon a computer program comprising program instructions, the computer program being loadable into a data processing unit and configured to cause execution of the method according to the first aspect when the computer program is run by the data processing unit.

According to a third aspect, this is a achieved by an apparatus for controlling passage of a group of vehicles.

The apparatus comprises a memory comprising executable instructions, one or more processors configured to communicate with the memory wherein the one or more processors are configured to cause the apparatus to receive a signal from at least one second vehicle in the group of vehicles comprising information indicative of its length.

The one or more processors are further configured to cause the apparatus to communicate information indicative of a time for passing a certain point along a road for the group of vehicles to a roadside unit or remote unit based on the received signal from the at least one second vehicle.

An advantage of some embodiments is that alternative approaches to controlling passage of a group of vehicles are provided.

Another advantage of some embodiments is that a real-time adaption to traffic conditions and competing flows of traffic is provided even for platooning vehicles.

Yet an advantage of some embodiments is that a predictability is provided even for platooning vehicles.

Yet another advantage of some embodiments is a safer traffic situation especially in environments with competing traffic flows since the group of vehicles is seen as a unity and the impact on competing traffic flows is minimized.

According to a fourth aspect, this is achieved by a vehicle comprising the apparatus according to the third aspect.

According to a fifth aspect, this is achieved by a system for controlling passage of a group of vehicles.

The system comprises a receiving module configured to receive a signal from at least one second vehicle in the group of vehicles comprising information indicative of its length

The system further comprises a communicating module configured to communicate information indicative of a time for passing a certain point along a road for the group of vehicles to a roadside unit or remote unit based on the received signal from the at least one second vehicle.

In some embodiments, any of the above aspects may additionally have features identical with or corresponding to any of the various features as explained above for any of the other aspects.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1a is a flowchart illustrating example method steps according to some embodiments;
Figure 1b is a flowchart illustrating example method steps according to some embodiments;
Figure 2 is a schematic overview illustrating an example system according to some embodiments;
Figure 3 is a schematic drawing illustrating example signaling according to some embodiments;
Figure 4 is a schematic block diagram illustrating an example arrangement according to some embodiments; and
Figure 5 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In the following, embodiments will be described where alternative approaches to controlling passage of a group of vehicles.

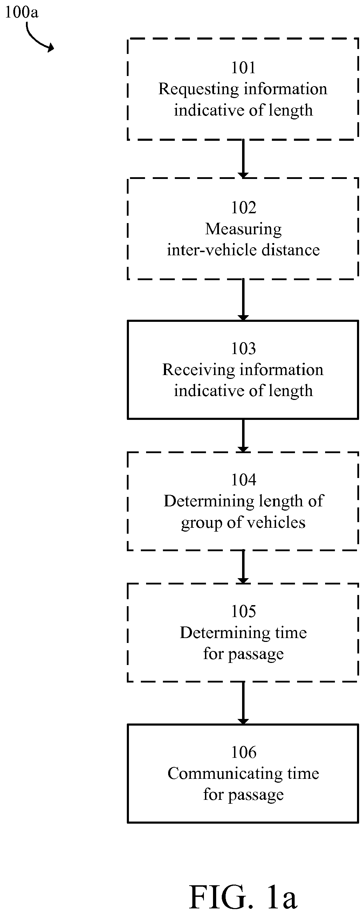

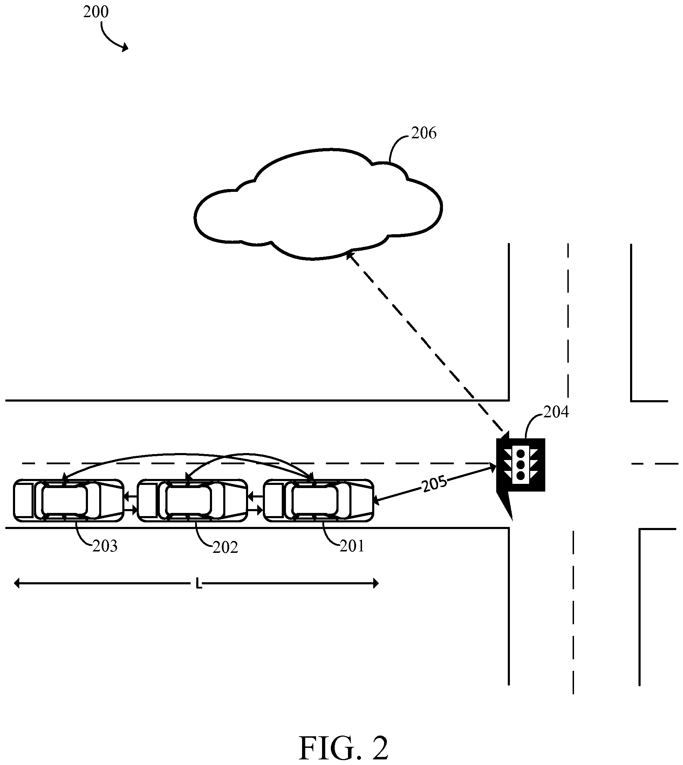

Figure 1a is a flowchart illustrating example method steps according to some embodiments. The passage controlling method 100a is for controlling passage of a group of vehicles. Thus, the passage controlling method 100a may, for example, be performed by the passage controlling system 200 of Figure 2 for controlling passage of a group of vehicles.

The passage controlling method 100a comprises following steps.

In step 103, a first vehicle receives a signal from at least one second vehicle in the group of vehicles comprising information indicative of its length.

In some embodiments, the signal from the at least one second vehicle further comprises information indicative of its distance to a vehicle in front or rear of the at least one second vehicle.

In some embodiments, the communication between the first vehicle and the at least one second vehicle is enabled via Vehicle to Vehicle (V2V) communication.

The V2V technology enables an exchange of signals, i.e. information, between V2V communication enabled vehicles.

In some embodiments, the first vehicle is a leader vehicle and the at least one second vehicle comprises a following vehicle.

In some embodiments, the group of vehicles, i.e. a platoon, comprises a leader vehicle and a plurality of following vehicles.

In step 106, the first vehicle communicates information indicative of a time for passing a certain point along a road for the group of vehicles to a roadside unit or remote unit based on the received signal from the at least one second vehicle.

In some embodiments, the communication between the first vehicle and the roadside unit is enabled via Vehicle to Infrastructure (V2I) communication.

In some embodiments, the passage controlling method 100a further comprises the following step.

In step 101, the first vehicle requests the at least one second vehicle to provide information indicative of its length.

In some embodiments, the passage controlling method 100a further comprises the following step.

In step 102, the at least one second vehicle measures an actual inter-vehicle distance to a vehicle in front or rear of the at least one second vehicle and wherein the information in the signal from the at least one second vehicle comprises the measured actual inter-vehicle distance.

In some embodiments, the passage controlling method 100a further comprises the following steps.

In step 104, a length of the group of vehicles is determined based on the first vehicle's length and the at least one second vehicle's length and distance to the vehicle in front or rear of the at least one second vehicle.

In step 105, a time for passing a certain point along a road for the group of vehicles is determined based on the determined length and speed of the group of vehicles.

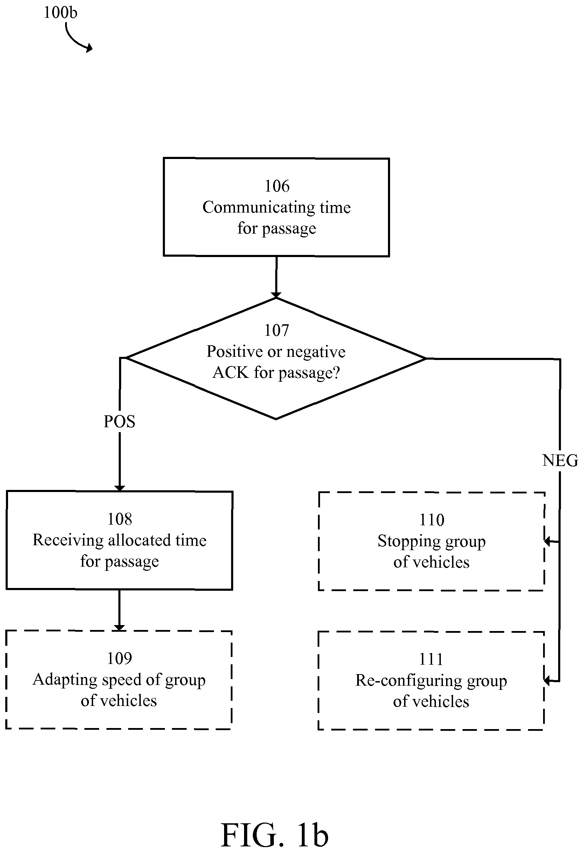

Figure 1b is a flowchart illustrating example method steps according to some embodiments. The passage controlling method 100b is for controlling passage of a group of vehicles. Thus, the passage controlling method 100b may, for example, be performed by the passage controlling system 200 of Figure 2 for controlling passage of a group of vehicles.

The passage controlling method 100b comprises following steps.

Step 106 of the passage controlling method 100a illustrated in Figure 1a corresponds to step 106 of the passage controlling method 100b illustrated in Figure 1b.

As an example, the first vehicle, i.e. the leader vehicle, communicates information, via V2I communication, indicative of a time for passing a certain point along a road for the group of vehicles, e.g. 30 seconds, to a road side unit, e.g. a traffic light, or remote unit, e.g. a controller in a cloud service configured to control the traffic light, based on the received signal from the at least one second vehicle, i.e. the following vehicle.

In step 107, a positive or a negative acknowledgement (ACK) for passage is received from the roadside unit or remote unit, in response to the communicated time for passing.

As an example, the first vehicle, i.e. the leader vehicle, receives either a positive acknowledgement for passage, e.g. POS, or a negative acknowledgement for passage, e.g. NEG, via V2I communication from the road side unit, e.g. a traffic light or remote unit e.g. a controller in a cloud service configured to control the traffic light, in response to the communicated time for passing, e.g. 30 seconds.

In step 108, an allocated time for passing is received from the road side unit or remote unit, in addition to the positive acknowledgement.

As an example, a road side unit, e.g. a traffic light or remote unit e.g. a controller in a cloud service configured to control the traffic light, may allocate a certain time e.g. 25 seconds for which the green state will remain green which in turn is communicated to the first vehicle, i.e. the leader vehicle, via V2I communication.

In some embodiments, the passage controlling method 100b further comprises the following step.

In step 109, a speed of the group of vehicles may be adapted.

As an example, in case the time for passing for the group of vehicles exceeds the allocated time for which the green state will remain green, as communicated by the road side unit or remote unit, the first vehicle, i.e. the leader vehicle, may determine that an adjustment of the speed of the group of vehicles will adjust the time for passing for the group of vehicles so that the group of vehicles may be able to pass in the time allocated by the road side unit or remote unit.

An adjustment of the speed may comprise an increase or a decrease of the speed e.g. "Increase the speed of the platoon to 45 km/h". The leader vehicle may then communicate this instruction to the following vehicles via V2V communication or any other suitable communication for information exchange between vehicles.

In addition to the adjustment of the speed or as an alternative, the leader vehicle may also determine that an adjustment of the inter-vehicle distance, i.e. the distance between the vehicles, is necessary in order to reduce the length of the group of vehicles and thereby the time for passage e.g. "Decrease distance to vehicle in front of you to 2 meters". The leader vehicle may communicate this instruction to the following vehicles via V2V communication or any other suitable communication for information exchange between vehicles.

The first vehicle, i.e. the leader vehicle, may also determine that based on the time for passing compared to the allocated time by the road side unit or remote unit, that no adaption of the speed is necessary and hence the speed may be maintained without adjustments.

A non-adjustment of the speed may comprise a maintenance of the speed e.g. "Maintain the speed of the platoon at 30 km/h". The leader vehicle may communicate this instruction to the following vehicles via V2V communication or any other suitable communication for information exchange between vehicles.

In some embodiments, the passage controlling method 100b further comprises the following steps.

In step 110, the group of vehicles may be stopped.

As an example, in case the time for passing for the group of vehicles exceeds the allocated time for which the green state will remain green, as communicated by the road side unit or remote unit, the first vehicle, i.e. the leader vehicle, may determine that an adjustment of the speed of the group of vehicles will not adjust the time for passing for the group of vehicles sufficiently so that the group may not be able to pass in the time allocated by the road side unit or remote unit. In this case, an alternative is to stop the group of vehicles, e.g. "Start deceleration and stop vehicle in 20 meters", wherein the leader vehicle may communicate this instruction to the following vehicles via V2V communication or any other suitable communication for information exchange between vehicles.

After stopping the group of vehicles the group may await a new allocated time for passing.

In step 111, the group of vehicles may be re-configured.

As an example, in case the time for passing for the group of vehicles exceeds the allocated time for which the green state will remain green, as communicated by the road side unit or remote unit, the first vehicle, i.e. the leader vehicle, may determine that a re-configuration of the platoon is necessary.

A configuring signal comprising information regarding the new configuration is sent from the first vehicle, i.e. the leader vehicle, to a newly identified leader vehicle amongst the following vehicles and to the following vehicles assigned to the newly identified leader vehicle.

The configuring signal may comprise information regarding the newly identified leader vehicle, which following vehicle(s) that will follow the newly identified leader vehicle, the inter-vehicle distance and which speed that should be maintained until otherwise instructed.

As an example, a road side unit, e.g. a traffic light, or a remote unit may allocate a certain time for which the green state will remain green which in turn is communicated to the first vehicle of the new group of vehicles, i.e. the newly identified leader vehicle, via V2I communication. The newly identified leader vehicle may then determine based on a signal from the at least one second vehicle, i.e. a following vehicle, in the group of vehicles comprising information indicative of its length a time for passing a certain point along a road for the group of vehicles and communicate the determined time to a roadside unit or remote unit.

In case of re-configuring the group of vehicles, the length of the group of vehicles is reduced by the number of vehicles that have joined a new group and thereby also the time for passing. The new group of vehicles may comprise a different number of vehicles compared to the remaining vehicles in the original group of vehicles and one parameter that will determine the maximum length (i.e. the number of vehicles and the inter-vehicle distance) of the original and new group of vehicles is the time for passing so that the group(s) of vehicles may be able to pass in the time allocated by the road side unit or remote unit.

In the new configuration, the newly identified leadervehicle, may be in a situation similar to the original group of vehicles which it was configured from, and the new configuration may also be divided according to the same principle.

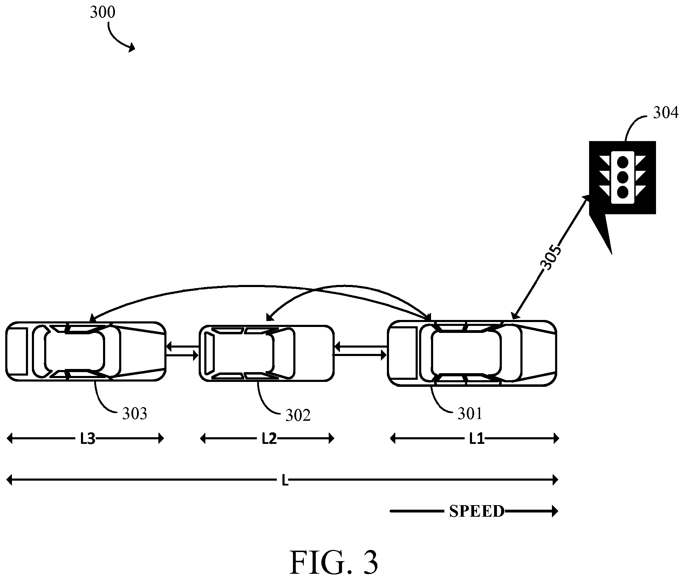

Figure 2 is a schematic overview illustrating an example system according to some embodiments. The passage controlling system 200 is for controlling passage of a group of vehicles. Thus, the passage controlling system 200 may, for example, be utilized for an example signalling 300 of Figure 3.

A first vehicle 201, i.e. a leader vehicle, comprises an apparatus for controlling passage of a group of vehicles. The apparatus comprises a memory comprising executable instructions, wherein one or more processors are configured to communicate with the memory.

The one or more processors are configured to cause the apparatus to receive a signal from at least one second vehicle 202,203 in the group of vehicles comprising information indicative of its length.

The one or more processors are further configured to cause the apparatus to communicate information 205 indicative of a time for passing a certain point along a road for the group of vehicles to a roadside unit 204 or remote unit 206 based on the received signal from the at least one second vehicle 202,203.

In some embodiments, the one or more processors are further configured to cause the apparatus to, in response to communicating information 205 indicative of the time for passing, receive a positive or negative acknowledgement for passing.

In some embodiments, the one or more processors are further configured to cause the apparatus to, in addition to the positive acknowledgement for passing, receive an allocated time for passing.

The road side unit 204, e.g. a traffic light, may be controlled via a traffic light controller comprised either in the road side unit 204 and/or in a remote unit 206 in a cloud service. The remote unit 206 may be configured to receive a continuous stream of information received first by the road side unit 204, as described above, for possible analysis, prediction and allocation. The road side unit 204 and the remote unit may be configured for a bi-directional wireless communication.

The cloud service comprises at least one cloud database and/or at least one server database which are databases that typically run on a cloud computing platform and access to it is provided as a service. The database services may provide scalability and high availability of the database. The cloud may be comprised in a one separate cloud service or in a plurality of associated cloud services.

The cloud service may be connected to road side units, vehicles or any other infrastructure which may provide relevant information about traffic conditions and traffic flows.

Figure 3 is a schematic drawing illustrating an example signaling according to some embodiments. The passage controlling system 200 illustrated in Figure 2 may, for example, be utilized for an example signalling 300 of Figure 3.

Figure 3 illustrates an environment comprising a group of vehicles 301,302,303 i.e. a platoon of vehicles. The platoon is driving towards a road side unit 304, e.g. a traffic light.

The first vehicle 301, i.e. the leader vehicle, receives a signal from at least one second vehicle 302,303, i.e. a following vehicle, via e.g. V2V communication, comprising information indicative of its length L2,L3.

The first vehicle 301, i.e. the leader vehicle, communicates information 305 indicative of a time for passing a certain point along a road for the group of vehicles to a roadside unit 304 or remote unit (not shown) based on the received signal from the at least one second vehicle 301,302, i.e. the following vehicle.

In some embodiments, the signal from the at least one second vehicle further comprises information indicative of its distance to a vehicle in front or rear of the at least one second vehicle.

In some embodiments, the at least one second vehicle 302,303 measures an actual inter-vehicle distance to a vehicle in front or rear of the at least one second vehicle and wherein the information in the signal from the at least one second vehicle comprises the measured actual inter-vehicle distance.

In some embodiments, a length L of the group of vehicles 301,302,303 is determined based on the first vehicle's length L1 and the at least one second vehicle's length L2,L3 and distance to the vehicle in front or rear of the at least one second vehicle. A time for passing a certain point along a road for the group of vehicles is determined based on the determined length Land speed of the group of vehicles.

In some embodiments, a positive or a negative acknowledgement for passage is received from the roadside unit 304 or remote unit, in response to the communicated time for passing 305.

In some embodiments, an allocated time for passing is received from the road side unit 304 or remote unit in addition to the positive acknowledgement.

In some embodiments, the at least one second vehicle 302,303 is requested by the first vehicle 301 to provide information indicative of its length L2,L3.

In some embodiments, the communication between the first vehicle and the at least one second vehicle is enabled via V2V communication.

In some embodiments, the communication between the first vehicle 301 and the roadside unit 304 or remote unit is enabled via V2I communication.

In some embodiments, the group of vehicles, i.e. a platoon, comprises a leader vehicle and a plurality of following vehicles.

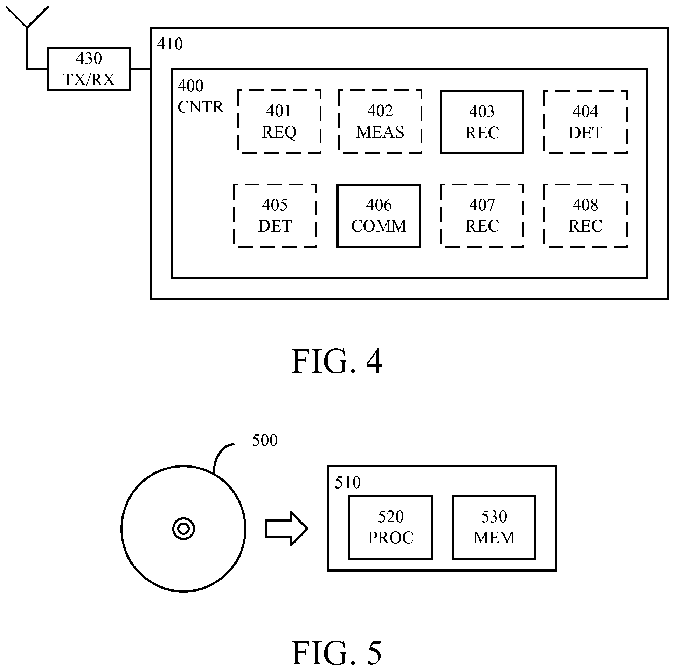

Figure 4 is a schematic block diagram illustrating an example arrangement according to some embodiments. The example arrangement is a passage controlling arrangement 410 for controlling passage of a group of vehicles.

The passage controlling arrangement 410 comprises controlling circuitry CNTR 400, which may in turn comprise a receiving arrangement REC 403, e.g. receiving circuitry, configured to receive a signal from at least one second vehicle in the group of vehicles comprising information indicative of its length.

The controlling circuitry CNTR 400 may further comprise a communicating arrangement COMM 406, e.g. communicating circuitry, configured to communicate information indicative of a time for passing a certain point along a road for the group of vehicles to a roadside unit or remote unit based on the received signal from the at least one second vehicle.

The controlling circuitry CNTR 400 may further comprise a transmitting arrangement TX/RX 430, e.g. transmitting circuitry, configured to transmit information and receive information wirelessly.

In some embodiments, the controlling circuitry CNTR 400 may further comprise a requesting arrangement REQ 401, e.g. requesting circuitry, configured to request the at least one second vehicle to provide information indicative of its length.

In some embodiments, the controlling circuitry CNTR 400 may further comprise a measuring arrangement MEAS 402, e.g. measuring circuitry, configured to measure an actual inter-vehicle distance to a vehicle in front or rear of the at least one second vehicle and wherein the information in the signal from the at least one second vehicle comprises the measured actual inter-vehicle distance.

In some embodiments, the controlling circuitry CNTR 400 may further comprise a determining arrangement DET 404, e.g. determining circuitry, configured to determine a length of the group of vehicles based on the first vehicle's length and the at least one second vehicle's length and distance to the vehicle in front or rear of the at least one second vehicle.

In some embodiments, the controlling circuitry CNTR 400 may further comprise a determining arrangement DET 405, e.g. determining circuitry, configured to determine a time for passing a certain point along a road for the group of vehicles based on the determined length and speed of the group of vehicles.

In some embodiments, the controlling circuitry CNTR 400 may further comprise a receiving arrangement REC 407, e.g. receiving circuitry, configured to receive, from the roadside unit or remote unit, a positive or a negative acknowledgement for passage in response to the communicated time for passing.

In some embodiments, the controlling circuitry CNTR 400 may further comprise a receiving arrangement REC 408, e.g. receiving circuitry, configured to receive, from the road side unit or remote unit, an allocated time for passing in addition to the positive acknowledgement.

The passage controlling arrangement 410 may be comprised in the passage controlling system 200 described in connection with Figure 2 and/or the passage controlling arrangement 410 may be configured to perform method steps of any of the methods described in connection with Figure 1a, Figure 1b and Figure 3.

Figure 5 is a schematic drawing illustrating an example computer readable medium according to some embodiments. The computer program product comprises a non-transitory computer readable medium 500 having thereon a computer program 510 comprising program instructions, wherein the computer program being loadable into a data processing unit and configured to cause execution of the method steps of any of the methods described in connection with Figure 1a, Figure 1b and Figure 3.

Generally, when an arrangement is referred to herein, it is to be understood as a physical product; e.g., an apparatus. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a vehicle.

Embodiments may appear within an electronic apparatus (associated with or comprised in a vehicle) comprising arrangements, circuitry, and/or logic according to any of the embodiments described herein. Alternatively or additionally, an electronic apparatus (associated with or comprised in a vehicle) may be configured to perform methods according to any of the embodiments described herein.

According to some embodiments, a computer program product comprises a computer readable medium such as, for example a universal serial bus (USB) memory, a plug-in card, an embedded drive or a read only memory (ROM). Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in an apparatus or vehicle 510. When loaded into the data processing unit, the computer program may be stored in a memory (MEM) 530 associated with or comprised in the data-processing unit. According to some embodiments, the computer program may, when loaded into and run by the data processing unit, cause execution of method steps according to, for example, any of the methods illustrated in Figure 1a, Figure 1b and Figure 3 or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method for controlling passage of a group of vehicles, comprising the steps of:
receiving (103), by a first vehicle, a signal from at least one second vehicle in the group of vehicles comprising information indicative of its length, and
communicating (106), by the first vehicle, information indicative of a time for passing a certain point along a road for the group of vehicles to a roadside unit or remote unit based on the received signal from the at least one second vehicle.

2. The method according to claim 1, wherein the signal from the at least one second vehicle further comprises information indicative of its distance to a vehicle in front or rear of the at least one second vehicle.

3. The method according to any of claims 1-2, further comprising the step of:
measuring (102) an actual inter-vehicle distance, by the at least one second vehicle, to a vehicle in front or rear of the at least one second vehicle and wherein the information in the signal from the at least one second vehicle comprises the measured actual inter-vehicle distance.

4. The method according to any of claims 1-3, further comprising the steps of:
determining (104) a length of the group of vehicles based on the first vehicle's length and the at least one second vehicle's length and distance to the vehicle in front or rear of the at least one second vehicle, and
determining (105) a time for passing a certain point along a road for the group of vehicles based on the determined length and speed of the group of vehicles.

5. The method according to any of claims 1-4, further comprising the step of:
receiving (107), from the roadside unit or remote unit, a positive or a negative acknowledgement for passage in response to the communicated time for passing.

6. The method according to any of claims 1-5, further comprising the step of:
receiving (108), from the road side unit or remote unit, an allocated time for passing in addition to the positive acknowledgement.

7. The method according to any of claims 1-6, further comprising the step of:
requesting (101), by the first vehicle, the at least one second vehicle to provide information indicative of its length.

8. The method according to any of claims 1-7, wherein the communication between the first vehicle and the at least one second vehicle is enabled via V2V communication.

9. The method according to any of claims 1-8, wherein the communication between the first vehicle and the roadside unit is enabled via V2I communication.

10. The method according to any of claims 1-9, wherein the first vehicle is a leader vehicle and the at least one second vehicle comprises a following vehicle.

11. The method according to any of claims 1-10, wherein the group of vehicles comprises a leader vehicle and a plurality of following vehicles.

12. A computer program product comprising a non-transitory computer readable medium, having thereon a computer program comprising program instructions, the computer program being loadable into a data processing unit and configured to cause execution of the method according to any of claims 1 through 11 when the computer program is run by the data processing unit.

13. An apparatus for controlling passage of a group of vehicles, comprising:
a memory comprising executable instructions,
one or more processors configured to communicate with the memory wherein the one or
more processors are configured to cause the apparatus to:
receive a signal from at least one second vehicle in the group of vehicles comprising information indicative of its length, and
communicate information indicative of a time for passing a certain point along a road for the group of vehicles to a roadside unit or remote unit based on the received signal from the at least one second vehicle.

14. A vehicle (201) comprising the apparatus according to claim 13.

15. A system for controlling passage of a group of vehicles, comprising:
a receiving module (403) configured to receive a signal from at least one second vehicle in the group of vehicles comprising information indicative of its length,
and
a communicating module (406) configured to communicate information indicative of a time for passing a certain point along a road for the group of vehicles to a roadside unit or remote unit based on the received signal from the at least one second vehicle.
